## Europäisches Patentamt

## European Patent Office

## Office européen des brevets

(11) Veröffentlichungsnummer: **0 168 753**
**B1**

(12) **EUROPÄISCHE PATENTSCHRIFT**

(45) Veröffentlichungstag der Patentschrift:
**07.12.88**

(21) Anmeldenummer: **85108497.0**

(22) Anmeldetag: **09.07.85**

(51) Int. Cl.⁴: **B 60 T 7/12,** B 62 D 1/24,
B 60 R 19/02

(54) Angetriebenes Fahrzeug für automatische Transportanlage.

(30) Priorität: **18.07.84 CH 3492/84**

(43) Veröffentlichungstag der Anmeldung:
**22.01.86 Patentblatt 86/4**

(45) Bekanntmachung des Hinweises auf die Patenterteilung:
**07.12.88 Patentblatt 88/49**

(84) Benannte Vertragsstaaten:
**AT BE CH DE FR GB IT LI NL SE**

(56) Entgegenhaltungen:
**EP-A- 0 106 131**
**DE-A- 1 580 794**
**DE-A- 2 932 118**
**DE-A- 3 219 247**
**FR-A- 2 512 407**
**GB-A- 1 430 406**
**GB-A- 2 014 773**

(73) Patentinhaber: **Gesellschaft für Roboter- und Logistiktechnologie, Rolotec AG, Gottstattstrasse 24, 2504 Biel (CH)**

(72) Erfinder: **Krieg, Walter, Orpundstrasse 30 A, CH-2555 Brügg (CH)**

(74) Vertreter: **Blum, Rudolf Emil Ernst et al, c/o E. Blum & Co Patentanwälte Vorderberg 11, CH-8044 Zürich (CH)**

## Beschreibung

Die Erfindung betrifft ein angetriebenes Fahrzeug für eine automatische Transportanlage, das unbemannt längs einer vorbestimmten Bahn fortbewegbar ist. Solche Fahrzeuge sind bekannt, insbesondere für den automatischen Transport von Werkstücken in Fabrikhallen.

Die Fahrzeuge bewegen sich auch innerhalb der Werkhallen, normalerweise auf vorgesehenen und meist gelb markierten Fahrbahnen ohne zusätzliche Absperrungen, wobei die Fahrzeuge innerhalb der in der Fahrtrichtung montierten, freitragenden oder an Drähten aufgehängten Sicherheitsbügel im Kollisionsfalle anhalten müssen. Da die fest montierten Sicherheitsbügel aus konstruktiven Gründen eine bestimmte Länge nicht überschreiten können und in den Kurven den Kurven-inneren Bereich nur sehr ungenügend schützen, sind höhere Geschwindigkeiten als z.B. 60 m/Min. aus Sicherheitsüberlegungen nicht denkbar. Will man zur Verbesserung der Transportleistung die Geschwindigkeit erhöhen, wie z.B. auf Freigelände mit langen Distanzen, so ist dies nach dem jetzigen Stand der Technik nur in abgesperrten Bereichen möglich, was praktisch die Anwendung von solchen Transportfahrzeugen sehr stark einengt.

Es ist in der dem Oberbegriff des Anspruchs 1 entsprechenden GB-A-2 014 773 vorgeschlagen worden, das den Lastaufnahmeteil eines Fahrzeugs darstellende Tastorgan verschiebbar anzuordnen, womit dieses bei einer Kollision gegen Federkraft zurückgestossen und gleichzeitig die Bremsung ausgelöst wird. Dabei treten aber weiterhin erhebliche Massenkräfte auf, welche zu Beschädigungen und Personenverletzungen führen können.

Es stellt sich deshalb die Aufgabe, ein Fahrzeug der vorstehend genannten Art so auszugestalten, dass auch bei höheren Fahrgeschwindigkeiten eine vollständige Sicherheit gegen die Verursachung von Personen- und Sachschäden im Kollisionsfall gegeben ist, indem nur sehr geringe und auch für Personen ungefährliche Kräfte auftreten.

Diese Aufgabe wird erfindungsgemäss durch die Merkmale des Anspruchs 1 gelöst. Eine bevorzugte Ausführungsform der Erfindung kennzeichnet sich dadurch, dass das berührungsempfindliche Tastorgan an einem Sicherheits-Wagen angeordnet ist, der mittels einer längenveränderbaren Halterung mit der Fahrzeugfront verbunden ist und sich in Fahrtrichtung vor dem Fahrzeug im wesentlichen längs dessen Bahn bewegt. Damit kann sichergestellt werden, dass auch im Bereich von Kurven sämtliche auf der Fahrbahn befindlichen Hindernisse erfassbar sind, indem die vom Fahrzeug befahrene Bahn zunächst vom Sicherheitswagen gefahren wird. Mit Vorteil ist die Rückzieheinrichtung mit einem rein mechanisch ausgelösten und wirkenden Antrieb ausgerüstet, um unabhängig von einer Strom- oder Druckluftversorgung zu sein, insbesondere einem in Betriebszustand gespannten Federpaket.

Die Erfindungsgemässe Anordnung hat den Vorteil, dass die Berührung mit einem Hindernis lediglich zur Auslösung der Rückzieheinrichtung dient und nicht etwa die Wirkung einer Stossaufnahme ausüben muss. Damit kann jegliche Krafteinwirkung, die über die Auslösekraft des Tastorgans hinausgeht, ausgeschlossen werden.

Nachfolgend wird anhand eines Ausführungsbeispiels, das in mehreren Figuren dargestellt ist, die Erfindung und deren Vorteile näher erläutert. Es zeigen:

Fig. 1 ein Fahrzeug nach der Erfindung in schematischer Ansicht im Zusammenhang mit einer Leit- bzw. Steuerdrahteinrichtung,

Fig. 2 das Fahrzeug gemäss Fig. 1 in schematischer Aufsicht bei Kurvenfahrt,

Fig. 3 eine schematische Seitenansicht des Tastorgans in ausgefahrener und zurückgezogener Stellung,

Fig. 4a–4c den Rückziehvorgang beim Auffahren auf ein Hindernis mit Details der Rückziehvorrichtung,

Fig. 5a–5d ein Ausführungsbeispiel des berührungsempfindlichen Tastorgans bei unterschiedlichen Beschlagungsvarianten, und

Fig. 6 die Detailansicht einer Seitenschutzvorrichtung.

Fig. 7 die Bremsanlage von einem Fahrzeug und einem Anhänger in schematischer Darstellung.

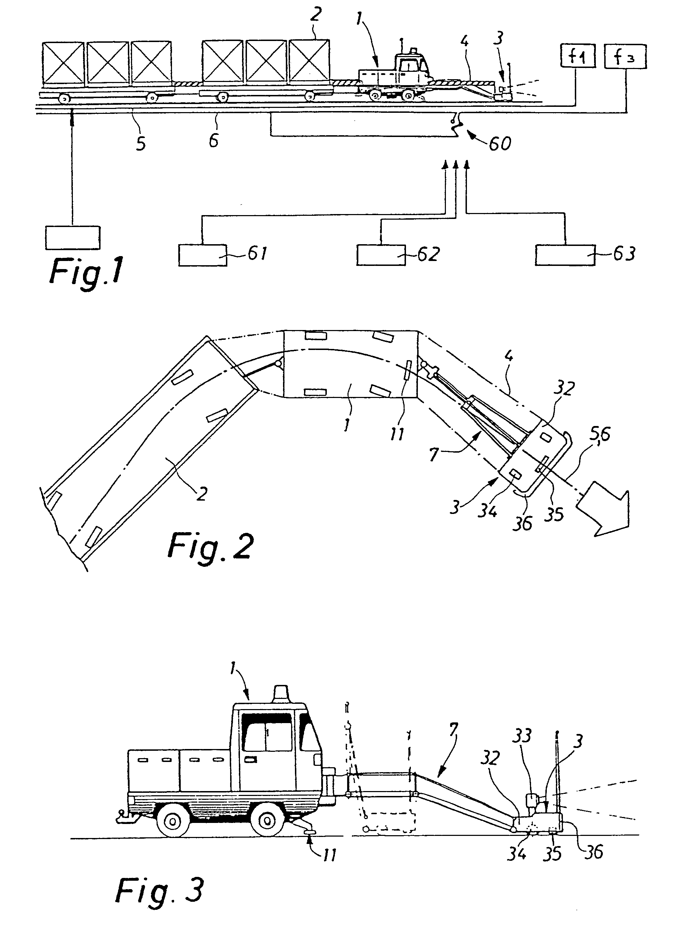

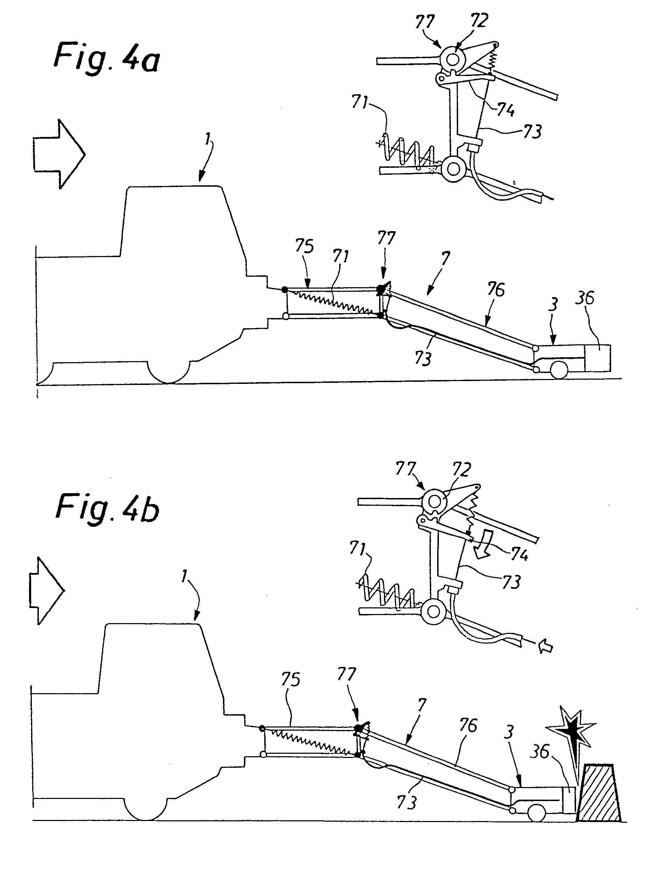

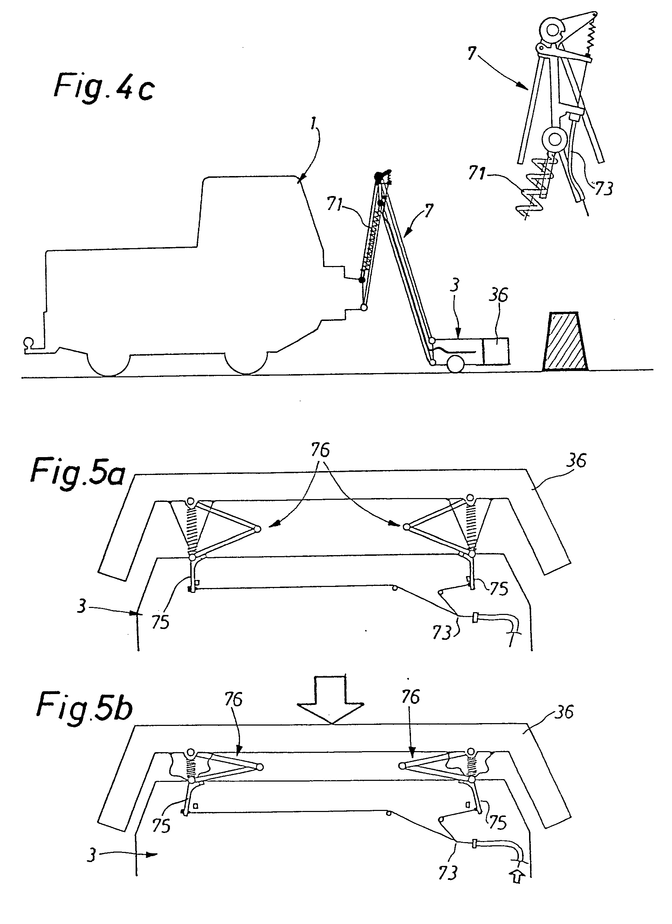

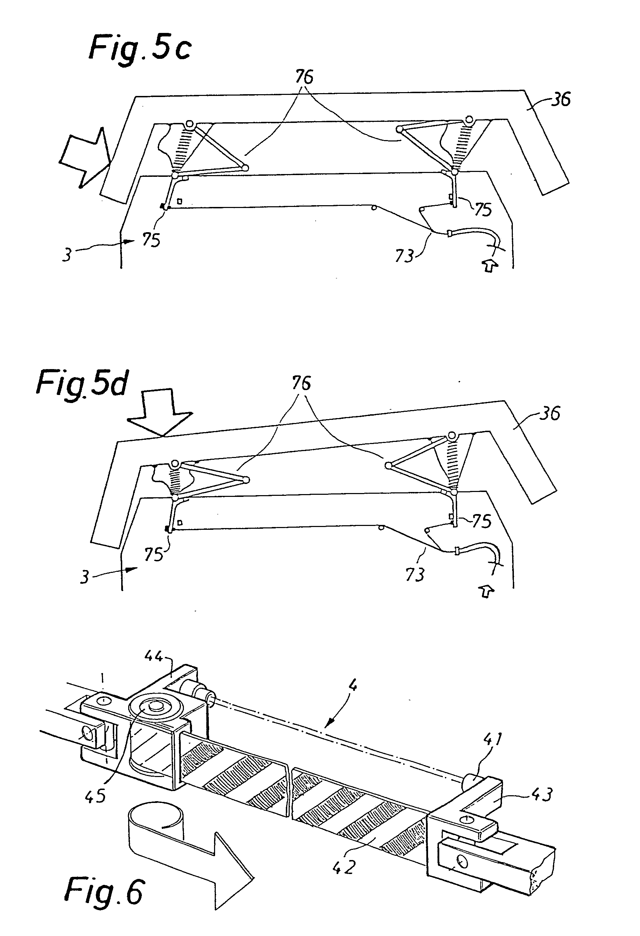

In den Figuren 1 bis 3 ist zunächst der grundsätzliche Aufbau des beanspruchten Fahrzeugs 1 sowie der Leitdrahtsteuerung zu sehen. Das Fahrzeug 1 ist mit einer Antenne 11 als Empfangseinrichtung versehen, die in Bodennähe an der Fahrzeugfront angeordnet ist, um ein elektromagnetisches, von einem Leitdraht 5 erzeugtes Wechselfeld bestimmter Frequenz $f_1$ zu empfangen und über eine Auswerteschaltung einen Lenkmotor des Fahrzeuges zu betätigen. Das Fahrzeug 1 folgt damit dem Leitdraht 5, wobei ähnlich wie bei Gleisfahrzeugen auch Weichen vorgesehen sein können. Die Bewegungen des Fahrzeuges sind dabei von einer Mikroprozessorsteuerung koordiniert. Für die örtliche Orientierung des Fahrzeuges längs dem durch den Leitdraht 5 bestimmten Parcours sind an den wichtigen Entscheidungsstellen Boden-Marken (z.B. Magnete bestimmter Ausgestaltung) vorhanden, die z.B. einen Binär-Code enthalten. Dieser kann beim Überfahren vom Fahrzeug gelesen und vom Mikroprozessor ausgewertet werden. Zwischen den Bodenmarkierungen wird die Distanz inkremental gemessen, so dass fest oder ad hoc programmierte Steuerbefehle für jeden Ort längs des Parcours verarbeitbar sind, wie z.B. Geschwindigkeitsänderungen vor Kurven oder Spezialfunktionen wie Hupen an gefährlichen Stellen usw. Leitdrahtsteuerungen dieser Art sind grundsätzlich bekannt. Sie erlauben den führerlosen Verkehr von Fahrzeugen über den Leitdrahtparcours. Im vorliegenden Fall soll dieser Parcours relativ grosse Transportdistanzen umfassen, die sich über ein ganzes Werkgelände erstrecken. Um die dazu nötigen höheren Fahrgeschwindigkeiten von ca. 10 km/h zu erlauben, sind bestimmte Sicherheitsmassnahmen zu treffen, welche bei Kollisionen, welche im Bereich allgemein zugänglicher Gebiete nicht auszuschliessen sind, das Risiko von Personen- und Sachschäden so weit als möglich zu reduzieren. Hierfür ist gemäss der Erfindung ein berührungsempfindliches Tastorgan 36 vorgesehen, das vorne an einem Sicherheitswagen 3 angeordnet ist, welcher mittels einer Rückzieheinrichtung 7 an der Fahrzeugfront angeordnet ist und von diesem vor sich her geschoben wird. Das Tastorgan 36 überragt die Fahrzeugfront um eine Länge, die mindestens dem maximalen Bremsweg des Fahrzeugs bei zulässiger Geschwindigkeit, d.h. etwa 2,5 m bei 10 km/h entspricht und schnellt bei Berührung unter Auslösung des Bremsvorganges zurück, wie anhand der Figuren 4 und 5 noch näher erläutert wird. Der Sicherheitswagen besitzt seinerseits eine Antenne 35 für die Leitdrahtsteuerung und weist ein entsprechend gesteuertes Radpaar 34 auf. Damit ist sichergestellt, dass der gestossene Sicherheitswagen die gesamte Fahrspur 1 bzw. der Anhänger 2 bestreicht, wie sich aus Fig. 2 ergibt. Als zusätzliches Sicherheitsmerkmal kann auf dem Sicherheits-Wagen 3 ein Distanzmesser 33 angeordnet sein, z.B. auf dem Ultraschallprinzip beruhend, wie sie heute im Handel erhältlich sind. Wird damit innerhalb einer bestimmten, einstellbaren Distanz ein Hindernis auf der Fahrbahn festgestellt, so wird über die Mikroprozessorsteuerung die Fahrgeschwindigkeit herabgesetzt. Neben der Fahrbahn befindliche, fest plazierte Objekte, die von der Distanzmessung erfasst werden, etwa Hausecken in Kurvenbereichen, können dabei durch die Mikroprozessorsteuerung nach Programm unterdrückt werden. Die Ultraschallsende- und Empfangsköpfe können ferner mit dem Radpaar 34 gekoppelt sein, so dass der Messbereich auch in Kurven im wesentlichen die Fahrbahn erfasst. Mit diesem Distanzmesser kann die Fahrgeschwindigkeit in Abhängigkeit der gemessenen Distanz zum Hindernis gesteuert werden, z.B. bei 10 m Abstand kann eine Reduktion auf 5 km/h erfolgen usw. bis bei 2 m Abstand das Anhalten erfolgt. Damit können sich zwei Züge synchron folgen, wobei der hintere jeweils der Geschwindigkeit angepasste Abstände enthält. Schliesslich ist noch eine Streckensicherung vorgesehen, wie in Fig. 1 angedeutet. Hierzu ist neben dem Leitdraht 5 ein Steuerdraht 6 vorgesehen, der ein elektromagnetisches Signal auf einer bestimmten Frequenz $f_3$ aussendet, das von einem Empfänger am Fahrzeug detektiert wird. Wird dieses Signal nicht empfangen, so wird das Fahrzeug sogleich gestoppt. Dasselbe gilt bekanntermassen beim Ausfall der Leitfrequenz $f_1$, so dass das Fahrzeug sich nicht ungesteuert fortbewegen kann. Der zusätzliche Steuerdraht 6 ist blockweise verlegt, so dass jeweils für jeden Block die Aussendung des

Signals $f_3$ mittels eines Schalters 60 unterbrochen werden kann. Dies kann von verschiedenen, für die Verkehrssicherheit verantwortlichen Stellen 61–63 aus für jeden Block separat erfolgen, etwa von der Werkfeuerwehr, dem Portier oder dem Rangierdienst bei Gleisübergängen, was das jederzeitige örtliche Anhalten jedes Fahrzeugs erlaubt. Damit wird auch bei allfälligem Versagen der Mikroprozessor Steuerung des Fahrzeugs ein sofortiges Anhalten des Fahrzeugs bewirkt.

Nachfolgend wird nun anhand der Figuren 4 und 5 ein Ausführungsbeispiel der Rückzieheinrichtung 7 sowie des auslösenden Tastorgans 36 näher beschrieben. In Fig. 4a ist zunächst die Situation im Betriebszustand dargestellt. Die Rückzieheinrichtung 7 besitzt zwei Faltarme 75, 76 mit einem Gelenk 77, welche unter der Einwirkung eines Federpakets 71 nach oben zusammenfaltbar sind. Im Ausgangszustand ist das Federpaket 71 im gespannten Zustand und das Gelenk 77 ist durch eine Falle 74, welche in der Nut eines Gelenkteiles 72 eingerastet ist, blockiert.

Beim Auftreffen des Tastorgans 36 auf ein Hindernis (Fig. 4b) wird die Falle 74 mittels eines Kabelzuges 73 gelöst, worauf sich die Rückzieheinrichtung 7 nach oben faltet und den Wagen 3 abrupt gegen die Fahrzeugfront zurückzieht, wobei dieser relativ zum Hindernis stehen bleibt oder sich leicht zurückzieht (Fig. 4c). Gleichzeitig werden die Bremsen betätigt und der Antrieb unterbrochen, so dass das Fahrzeug vor dem Hindernis zum Stehen kommt (Fig. 4c). Eine beispielsweise Ausgestaltung des Tastorgans 36 am Sicherheitswagen ist aus den Fig. 5a-d ersichtlich. Dabei ist das Tastorgan 36 als Bügel ausgebildet, der mittels einer elastischen Aufhängung 76 am Wagen befestigt ist. Die Aufhängung ist über Hebel 75 mit dem Kabelzug 73 verbunden. Bei zentraler Beaufschlagung (Fig. 5b) wird die Aufhängung 76 gestaucht und über beide Hebel 75 der Kabelzug 73 betätigt, der die Falle 74 des Gelenks 77 betätigt. In den Figuren 5c und 5d sind die Fälle linksseitiger, exzentrischer, frontaler bzw. seitlicher Beaufschlagung gezeigt, wobei jedesmal über den betreffenden Hebel 75 der Kabelzug 73 betätigt wird. Ein entsprechender Vorgang ergibt sich bei rechtsseitiger, exzentrischer Belastung.

Es ist darauf hinzuweisen, dass auch andere Ausgestaltungen der Rückzieheinrichtung sowie des Tastorgans möglich sind. So kann die Rückzieheinrichtung auch als Teleskoparm ausgestaltet sein, der unter der Einwirkung von Federn bzw. von Druckluft betätigbar ist. Insbesondere kann dabei ein Druckkolben die Rückzieheinrichtung gegen die Federkraft im ausgefahrenen Zustand halten, wobei die Berührung des Tastorgans ein Ventil des Druckkolbens öffnet. Diese Ausgestaltung hat den Vorteil, dass die Rückzieheinrichtung nach der Betätigung über das Druckluftgerät des Fahrzeugs in die Ausgangslage bringbar ist. Die Rückzieheinrichtung kann ferner so gesichert sein, dass sie nur in der Fahrt, nicht aber im Stillstand ausgelöst werden kann. Um den Zwischenraum zwischen dem Sicherheits- wagen 3 und der Fahrzeugfront gegen unbeabsichtigtes seitliches Eindringen von Personen oder Gegenständen abzusichern, ist auf beiden Seiten eine Schutzeinrichtung 4 mit einem längenveränderlichen Schutzband 42 vorgesehen (Fig. 1, 2 und 6), das mit einer Lichtschranke 41 kombiniert ist. Schutzband 42 und Lichtschranke 41 sind an Gelenkteilen 43, 44 angeordnet, die je mit der Fahrzeugfront bzw. dem Sicherheits-Wagen gelenkig verbunden sind. Im fahrzeugseitigen Gelenkteil 44 ist zudem eine Aufwicklungseinrichtung 45 für das Schutzband vorgesehen. Das Schutzband 42 verhindert das Betreten des Bereiches zwischen dem Sicherheitswagen und der Fahrzeugfront. Bei Auslösung der Lichtschranke findet ein Nothalt des Fahrzeuges statt. Entsprechende Anordnungen können auch zwischen dem Fahrzeug 1 und den Anhängern 2 vorgesehen sein (Fig. 1).

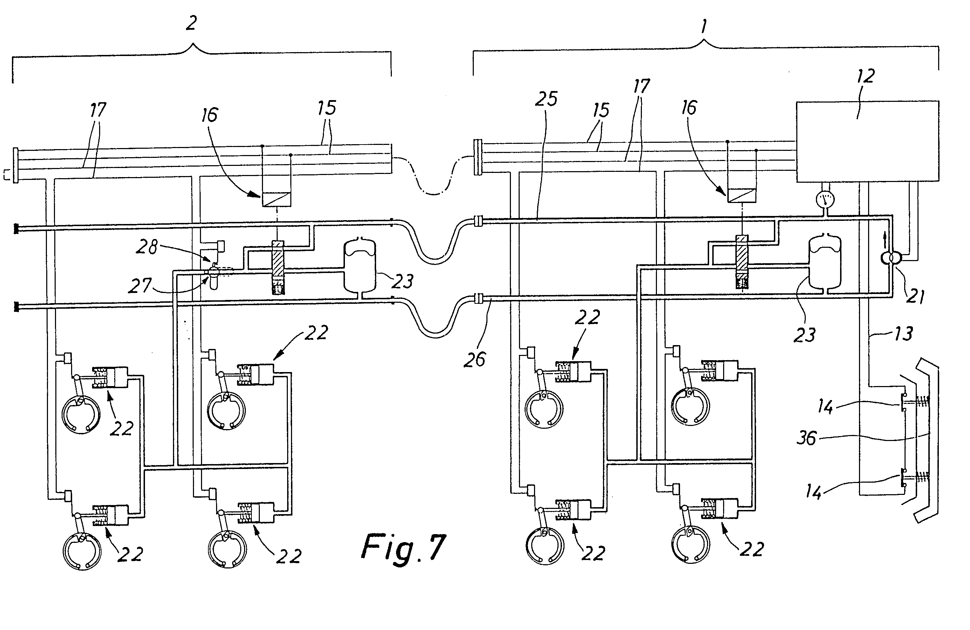

Wie bereits erläutert, bestimmt der Bremsweg die Länge, um welche das Tastorgan 36 die Fahrzeugfront überragen soll, bzw. die mögliche Höchstgeschwindigkeit. Es ist damit ein möglichst kurzer Bremsweg angestrebt, was insbesondere durch ein sofortiges Ansprechen aller Bremsen unmittelbar bei Auslösung der Rückzieheinrichtung 7 erzielbar ist. Bei Anhängerzügen sollen deshalb auch die Anhängerbremsen unmittelbar bei der Auslösung der Rückzieheinrichtung ansprechen. In Fig. 7 ist schematisch eine bevorzugte Bremsanlage gezeigt, welche diesen Anforderungen Rechnung trägt. Darin sind eine elektrische Steuerung (in dünnen Linien) sowie eine Druckbremsanlage (in dickeren Linien) gezeigt, die parallel durch den gesamten Anhängerzug verlaufen.

Die elektrische Steuerung 12 ist über eine Auslöseleitung 13 mit dem Tastorgan 36 am Fahrzeug 1 verbunden, welche über Endschalter 14 unterbrochen wird, sobald das Tastorgan 36 beaufschlagt wird. Durch die Steuerung 12 wird daraufhin der Strom in Steuerleitungen 15 ebenfalls unterbrochen. An die Steuerleitungen 15 angeschlossene Elektroventile 16 verbinden in ihrer betätigten Stellung (in Fig. 7 dargestellt) eine im Fahrzeug 1 angeordnete, gesteuerte Pumpe 21 der Druckbremsanlage über eine Druckleitung 25 bzw. Rückflussleitung 26 mit den einzelnen Bremsgarnituren 22, welche unter Druck gelöst sind. In ihrer Ruhestellung verbinden die Elektroventile 16 die Bremsgarnituren dagegen mit je einem Ausgleichsbehälter 23 pro Fahrzeug bzw. Anhänger, wodurch eine plötzliche Druckentlastung eintritt. Wird nun der Strom in den Steuerleitungen 15 beim Not-Halt unterbrochen, so schaltet die Pumpe 21 aus und alle Elektroventile 16 werden zugleich in ihre Ruhestellung gesetzt, womit bei allen Bremsgarnituren 22 über die Ausgleichsbehälter 23 eine Druckentlastung eintritt und die Bremsung sofort und überall zugleich eingeleitet wird. Zum Lösen der Bremsen nach einem solchen Not-Halt werden die Elektroventile 16 durch die Steuerung betätigt, wodurch die Bremsgarnituren 22 wiederum mit der Pumpe 21 verbunden und die Bremsen gelöst werden.

Zum Entkuppeln ist in jedem Anhänger 2 ein Hahn vorgesehen, der hierfür auf die sog. manuelle Stellung gebracht wird, womit die Bremsgarnituren 22 unter Druck bleiben. Mittels Endschalter 28 wird zugleich eine Hilfssteuerleitung 17 unterbrochen, was über die Steuerung 12 dieselben Operationen, wie bei einem Not-Halt auslöst, d.h. die Elektroventile 16 in ihre Ruhestellung bringt, womit der Druck in der Druckleitung 25 verschwindet und der Anhänger 2 entkoppelt werden kann.

Diese Bremsanlage stellt sicher, dass der Bremsweg minimal gehalten werden kann, da die Reaktionszeit der Bremsen vernachlässigbar klein wird.

Insgesamt erlauben die genannten Einrichtungen, insbesondere das Tastorgan mit Rückzieheinrichtung, einen gefahrlosen Betrieb des fahrerlosen Fahrzeuges auf einem auch von anderen Verkehrsteilnehmern befahrenen Gelände.

## Patentansprüche

1. Angetriebenes Fahrzeug (1) für eine automatische Transportanlage, das unbemannt längs einer vorbestimmten Bahn fortbewegbar ist und ein berührungsempfindliches Tastorgan (36) aufweist, welches die Fahrzeugfront in Fahrtrichtung um eine, den Bremsweg übersteigende Länge überragt, wobei das Tastorgan bei Berührung eines Hindernisses unter Auslösung des Bremsvorganges gegen die Fahrzeugfront zurückbewegbar ist, derart, dass das Fahrzeug (1) innerhalb der genannten Länge anhaltbar ist, dadurch gekennzeichnet, dass das Tastorgan (36) mit einer Rückzieheinrichtung (7) gekoppelt ist, derart, dass es gleichzeitig mit der Auslösung des Bremsvorgangs mittels der Rückzieheinrichtung (7) gegen die Fahrzeugfront zurückziehbar ist.

2. Fahrzeug nach Anspruch 1, dadurch gekennzeichnet, dass das berührungsempfindliche Tastorgan (36) an einem Sicherheits-Wagen (3) angeordnet ist, der mittels einer längenveränderbaren Halterung (75, 76) mit der Fahrzeugfront verbunden ist und sich in Fahrtrichtung vor dem Fahrzeug (1) im wesentlichen längs dessen Bahn bewegt.

3. Fahrzeug nach Anspruch 2, dadurch gekennzeichnet, dass der Sicherheits-Wagen (3) ein steuerbares Radpaar (34) aufweist, derart, dass sich der Wagen auf einer der Fahrzeugfront entsprechenden Bahn bewegt.

4. Fahrzeug nach einem der vorangehenden Ansprüche, dadurch gekennzeichnet, dass die Rückzieheinrichtung (7) ein im Betriebszustand gespanntes Federpaket (71) besitzt, mittels welchem die Rückzieheinrichtung bei Berührung des Tastorgans (36) zum Zurückziehen antreibbar ist.

5. Fahrzeug nach einem der vorangehenden Ansprüche, dadurch gekennzeichnet, dass es einen Distanzmesser (33) zur berührungslosen Abstandsmessung von Gegenständen im Bereich der Fahrbahn aufweist, wobei die Fahrgeschwindigkeit in Abhängigkeit zum festgestellten Abstand steuerbar ist und wobei eine Einrichtung zur Unterdrückung der Steuersignale für fest plazierte Gegenstände nach Programm vorgesehen ist.

6. Fahrzeug nach einem der vorangegangenen Ansprüche, dadurch gekennzeichnet, dass für die Richtungssteuerung eine Leitdrahtsteuerung mit einer Empfangseinrichtung (11) zur Aufnahme von elektrischen, durch einen die Fahrbahn festlegenden Leitdraht (5) erzeugten Signalen ($f_1$) und eine damit verbundene Auswerteschaltung für die Betätigung eines Lenkmotors vorgesehen ist.

7. Fahrzeug nach Anspruch 2 und 6, dadurch gekennzeichnet, dass der Sicherheitswagen (3) mit einer Leitdrahtsteuerung versehen ist.

8. Fahrzeug nach einem der vorangehenden Ansprüche, gekennzeichnet durch eine Nothaltevorrichtung mit einer Empfangseinrichtung für eine, von einem im Bereich der Fahrbahn blockweise verlegten Steuerdraht (6) gesendeten Steuerfrequenz ($f_3$), und einem Schalter zur Unterbrechung des Antriebs bei Ausbleiben des Empfanges der Steuerfrequenz und gegebenenfalls des Leitdrahtsignals ($f_1$).

9. Fahrzeug nach Anspruch 2 und einem der vorangehenden Ansprüche 3 bis 8, dadurch gekennzeichnet, dass zwischen dem Sicherheitswagen (3) und der Front des Fahrzeugs (1) seitlich je ein längenveränderliches federbelastetes Schutzband (42) sowie eine parallel dazu angeordnete Lichtschranke (41) vorgesehen ist, derart, dass bei seitlicher Beaufschlagung der Bremsvorgang ausgelöst wird.

10. Fahrzeug nach einem der vorangehenden Ansprüche mit mindestens einem Anhänger (2), dadurch gekennzeichnet, dass zwischen dem Anhänger (2) und der Fahrzeugrückseite seitlich je ein längenveränderliches Schutzband (42) sowie eine parallel dazu angeordnete Lichtschranke (41) vorgesehen ist, derart, dass bei seitlicher Beaufschlagung der Bremsvorgang ausgelöst wird.

11. Fahrzeug nach einem der vorangehenden Ansprüche, das eine Druckbremsanlage (21–26) besitzt mit Radbremsen (22), die unter Druck gelöst und durch Druckabsenkung betätigbar sind, gekennzeichnet durch eine elektrische Bremsdrucksteuerung (12–17), die mit dem Tastorgan (36) bzw. der Rückzieheinrichtung (7) so gekoppelt ist, dass sie bei deren Betätigung eine plötzliche Druckabsenkung auslöst.

12. Fahrzeug nach Anspruch 11 mit mindestens einem Anhänger (2), dadurch gekennzeichnet, dass der Anhänger druckbeaufschlagte Radbremsen (22) besitzt, wobei die Druckbremsanlage eine Fahrzeugseitige Druckerzeugungsvorrichtung (21) aufweist, die über Druckleitungen (25) mit allen Radbremsen (22) verbunden ist und dass im Fahrzeug (1) sowie jedem Anhänger (2) ein Druckabsenkventil (16) vorgesehen ist, von denen jedes im wesentlichen gleichzeitig durch die elektrische Steuerung (12–17) betätigbar ist.

## Claims

1. A driven vehicle (1), for an automatic transportation installation, which can be moved unmanned along a predetermined path and comprises a contact-responsive feeler member (36), which projects from the front of the vehicle in the travel direction by a length exceeding the braking distance, the feeler member being capable of backwards movement towards the front of the vehicle on contact with an obstacle by initiation of the braking process in such a way that the vehicle (1) can be stopped within the afore-mentioned length, characterized in that the feeler member (36) is coupled with a retracting means (7) such that at the same time as the initiation of the braking process it can be retracted towards the vehicle front by means of the retracting means (7).

2. A vehicle according to claim 1, characterized in that the contact-responsive feeler member (36) is arranged on a safety cart (3), which is connected by means of a length-adjustable support (75, 76) with the vehicle front and moves in the travel direction in front of the vehicle (1) substantially along the path thereof.

3. A vehicle according to claim 2, characterized in that the safety cart (3) comprises a pair of wheels (34), controllable such that the cart moves on a path corresponding to that of the vehicle front.

4. A vehicle according to any one of the preceding claims, characterized in that the retracting means (7) comprises a set of springs (71), tensioned in the operative condition, by means of which the retracting means can be driven to retract upon said feeler member (36) making contact.

5. A vehicle according to any one of the preceding claims, characterized in that it comprises a distance gauging means (33) for non-contact distance gauging of objects in the area of the travel path, the speed of travel being controllable in accordance with the gauged distance, a device being provided for suppressing in accordance with a program control signals for permanently placed objects.

6. A vehicle according to any one of the preceding claims, characterized in that for directional control there is provided a guide wire control system with a receiving means (11) for receiving electric signals ($f_1$) generated by a guide wire (5) defining the travel path and an evaluating circuit connected therewith for operating a steering motor.

7. A vehicle according to claim 2 and claim 6, characterized in that the safety cart (3) is provided with a guide wire control system.

8. A vehicle according to any one of the preceding claims, characterized by an emergency stopping means with a receiving means for a control frequency ($f_3$) sent from a control wire (6) laid blockwise in the area of the travel path, and a switch for interrupting the drive in the absence of receipt of the control frequency and optionally the guide wire signal ($f_1$).

9. A vehicle according to claim 2 and any of the claims 3 to 8, characterized in that between the safety cart (3) and the front of the vehicle (1) there is provided laterally a spring-loaded safety ribbon (42) of variable length and a light barrier (41) arranged parallel thereto, in such a way that on lateral loading the braking process is triggered.

10. A vehicle according to any one of the preceding claims with at least one trailer (2), characterized in that laterally between the trailer (2) and the vehicle rear there are provided a safety ribbon (42) of variable length and a light barrier (41) arranged parallel thereto, in such a way that on lateral loading the braking process is triggered.

11. A vehicle according to any one of the preceding claims, comprising a pressure braking system (21–26) with wheel brakes (22) which are released under pressure and are operable by pressure decrease, characterized by an electric braking pressure control means (12–17), which is so coupled with the feeler member (36) or the retracting means (7) that upon operation thereof it triggers a sudden pressure decrease.

12. A vehicle according to claim 11 with at least one trailer (2), characterized in that the trailer comprises pressure-loaded wheel brakes (22), the pressure braking system comprising a vehicle-mounted pressure-generating means (21), which is connected via pressure lines (25) with all the wheel brakes (22) and in that in the vehicle (1) and each trailer (2) there is provided a pressure-reducing valve (16), each of which valves is operable substantially simultaneously by the electric control (12–17).

**Revendications**

1. Véhicule entraîné (1) pour une installation de transport automatique, susceptible d'être déplacé, sans équipage humain, le long d'une voie prédéterminée, et présentant un organe palpeur (36) sensible aux contacts, qui dépasse l'avant du véhicule dans la direction de progression, sur une longueur supérieure au trajet de freinage, l'organe palpeur, lorsqu'il vient en contact avec un obstacle, étant capable d'être ramené vers l'avant du véhicule moyennant suppression du processus de freinage, de telle sorte que le véhicule (1) puisse être retenu à l'intérieur de la longueur précitée, caractérisé en ce que l'organe palpeur (36) est couplé à un dispositif (7) de rappel en arrière, de telle sorte que, en même temps qu'a lieu la suppression du processus de freinage, le véhicule puisse être ramené en arrière au moyen du dispositif (7) de rappel en arrière.

2. Véhicule suivant la revendication 1, caractérisé en ce que l'organe palpeur (36) sensible aux contacts est disposé sur un chariot de sécurité (3) qui, par une attache (75, 76) modifiable en longueur, est relié à l'avant du véhicule et se déplace devant le véhicule dans la direction de progression, en principe le long de sa trajectoire.

3. Véhicule suivant la revendication 2, caractérisé en ce que le chariot de sécurité (3) comporte une paire de roues (34) susceptibles d'être dirigées, de sorte que le chariot se déplace sur une trajectoire correspondant à l'avant du véhicule.

4. Véhicule suivant l'une quelconque des revendications précédentes, caractérisé en ce que le dispositif (7) de rappel en arrière possède un paquet de ressorts (71) tendu dans l'état d'activité, au moyen duquel le dispositif de rappel en arrière peut être commandé pour le retour en arrière lors du contact de l'organe palpeur (36).

5. Véhicule suivant l'une des revendications précédentes, caractérisé en ce qu'il comporte un appareil de mesure de distance (33) pour la mesure sans contact des distances à des objets dans la région de la voie de progression, la vitesse de progression pouvant être commandée en dépendance de la distance déterminée, et un dispositif étant prévu pour l'étouffement des signaux de commande, suivant un programme, pour des objets placés de façon fixe.

6. Véhicule suivant l'une des revendications précédentes, caractérisé en ce que, pour la commande en direction, on a prévu une commande par fil conducteur avec un dispositif récepteur (11) pour la réception de signaux électriques (f₁) engendrés par un fil conducteur (5) déterminant la trajectoire de progression, et un circuit d'exploitation relié à ce conducteur pour la mise en action d'un moteur de direction.

7. Véhicule suivant les revendications 2 et 6, caractérisé en ce que le chariot de sécurité (3) est pourvu d'une commande par fil conducteur.

8. Véhicule suivant l'une quelconque des revendications précédentes, caractérisé par un dispositif d'arrêt d'urgence, avec un dispositif récepteur pour une fréquence de direction (f₃) émise par un fil directeur (6) bloqué dans la région de la trajectoire du véhicule, et avec un commutateur pour interrompre l'entraînement lors de l'absence de la réception de la fréquence de direction et éventuellement du signal (f₁) du fil conducteur.

9. Véhicule suivant la revendication 2 et l'une des revendications précédentes 3 à 8, caractérisé en ce qu'entre le chariot de sécurité (3) et l'avant du véhicule (1), on a prévu latéralement, chaque fois, une bande de protection (42) chargée par ressort, de longueur modifiable, ainsi qu'une barrière lumineuse (41) disposée parallèlement à celle-ci, de telle sorte que, lors d'une sollicitation latérale, le processus de freinage soit déclenché.

10. Véhicule suivant l'une des revendications précédentes, avec au moins une remorque (2), caractérisé en ce qu'entre la remorque (2) et l'arrière du véhicule, on a prévu latéralement, chaque fois, une bande de protection (42) de longueur modifiable, ainsi qu'une barrière lumineuse (41) parallèle à celle-ci, de sorte que, lors d'une sollicitation latérale, le processus de freinage soit déclenché.

11. Véhicule suivant l'une des revendications précédentes, qui possède une installation de freinage à pression (21, 26) avec des freins (22) sur les roues, qui sont libérés sous pression et actionnables par baisse de la pression, caractérisé par un dispositif de commande électrique (12, 17) de la pression des freins, lequel est couplé à l'organe palpeur (36), respectivement au dispositif (7) de rappel en arrière, de sorte que, lors de l'actionnement de ceux-ci, une chute de pression subite soit déclenchée.

12. Véhicule suivant la revendication 11, avec au moins une remorque (2), caractérisé en ce que la remorque possède des freins (22) sur les roues, sollicités par pression, l'installation de freinage à pression comportant un dispositif (21) pour engendrer la pression, du côté du véhicule, laquelle est reliée par des conduites sous pression (25) à tous les freins (22) des roues, et en ce que dans le véhicule (1) ainsi que dans chaque remorque (2), on a prévu une soupape (16) d'abaissement de la pression, dont chacune est actionnable en principe simultanément par le dispositif de commande électrique (12, 17).

Fig.1

Fig. 2

Fig. 3

## Fig. 4a

## Fig. 4b

Fig.4c

Fig.5a

Fig.5b

Fig.5c

Fig.5d

Fig.6

15

Fig. 7

EP 0 168 753 B1